(19) Europäisches Patentamt / European Patent Office / Office européen des brevets

(11) **EP 2 023 271 A2**

(12) **EUROPEAN PATENT APPLICATION**

(43) Date of publication:
**11.02.2009 Bulletin 2009/07**

(51) Int Cl.:
*G06K 9/62* (2006.01)　　　*G06K 9/46* (2006.01)

(21) Application number: **08014084.1**

(22) Date of filing: **06.08.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **06.08.2007　US 954153**<br>　　　　　　　**31.03.2008　US 58803 P**<br><br>(71) Applicant: **Carestream Health, Inc.**<br>**Rochester, NY 14608-1733 (US)** | (72) Inventors:<br>• **Chen, Shoupu**<br>　**Rochester, New York 14608 (US)**<br>• **Ray, Lawrence Allen**<br>　**Rochester, New York 14608 (US)**<br><br>(74) Representative: **Wagner, Karl H.**<br>**Wagner & Geyer Partnerschaft**<br>**Patent- und Rechtsanwälte**<br>**Gewürzmühlstrasse 5**<br>**80538 München (DE)** |

(54) **Linear structure verification in medical applications**

(57)　A method is disclosed for verifying linear structures in a digital mammographic image, comprising providing a configurable linear structure verifier in mammography computer assisted diagnosis system; optionally using an microcalcification candidate cluster driven linear structure verification methodology; selecting parameters for the linear structure verifier from a plurality of different parameter generating sources, at least one of which is controllable by human input; configuring the verifier according to selected parameters; and verifying linear structure using cascade rules.

*FIG. 1*

**Description**

**FIELD OF THE INVENTION**

The invention relates generally to image processing in medical applications, and in particular, to mammography CAD.

**BACKGROUND OF THE INVENTION**

Mammography is an effective method of screening for breast cancer, a leading cause of mortality among women. However, analyzing mammograms requires skilled radiologists whose performance can be degraded by the demand of viewing a large number of images in a finite amount of time. The computer-aided detection (CAD) feature in many mammography systems has been provided to assist radiologists in capturing true-positives (TP) that might otherwise have been overlooked.

An abnormality in mammograms includes microcalcifications (MCC), which are tiny deposits of calcium in breast carcinoma. It is very difficult to distinguish between malignant and benign microcalcification clusters, even for experienced radiologists, which may lead to a high rate of unnecessary biopsies. Therefore, it is desirable to design the CAD algorithm in such a way that a high TP rate can be achieved while the number of false-positives (FPs) is kept to a minimum. It has been noted that many FP MCC candidates as selected by mammography CAD systems in the past were found to fall on the linear normal structures such as blood vessels in digital or film-based mammograms. Thus, it is believed that removing those MCC candidates that are associated with linear structures will significantly reduce the overall FP rate.

Various methods for extracting linear structures from a mammographic image have been proposed. Zwiggelaar, Parr, and Taylor (R. Zwiggelaar, T. C. Parr, and C. J. Taylor, "Finding orientated line patterns in digital mammographic images," Proc. 7th Br. Machine Vision Conf., 1996, pp. 715-724.) have compared the performance of several different approaches (including orientated bin and line operator methods) to the detection of linear structures with synthetic mammographic images. Their results suggest significant differences between the different approaches. One approach has been implemented as a multi-scale line operator and gives intuitively convincing results. The output could be used for classifying linear structures.

The work of line operator can be described as follow: The line operator takes the average grey level of the pixels lying on an orientated local line passing through the target pixel and subtracts the average intensity of all the pixels in the locally orientated neighborhood. The line strength is compared for n orientations. Line direction is obtained from the orientation producing the maximum line strength. Scale information can be obtained by applying the line operator to images that are rescaled by Gaussian smoothing and sub-sampling. For each pixel, the scale producing the maximum line strength is taken as the detected line scale.

Cerneaz et al. (N. Cerneaz and M. Brady, "Finding Curvilinear Structures in Mammograms," Lecture Notes in Computer Science, 905, pp. 372-382, 1995) introduced a method that estimates the intensity profile of the curvilinear structures (CLS) in mammograms in a single scale. In this method, the CLS are assumed to have circular cross section when the breast is not compressed. And the cross section of CLS in mammogram is assumed to be elliptical. Candidate pixels for CLS are detected using the response of a second order difference operation which is applied in four directions. If there is a sufficient high response for one of the orientations the pixel will form part of a CLS. A measure of line strength is obtained by determining the contrast of the line profile at these pixels.

Wai et al. (A Multi-resolution CLS Detection Algorithm for Mammographic Image Analysis," Medical Imaging Computing and Computer-Assisted Intervention, MICCAU, pp. 865-872, 2004) adopted the two-step method from Cerneaz's work and devised a multi-resolution ridge detector for structures ranging from 1800 microns to 180 microns. Wai et al. also enhanced the performance of the detector by using a local energy thresholding to suppress undesirable response from noise. The local energy is also used to determine CLS junctions.

Alexander Schneider et al., in U.S. Patent Application Publication No. US20020159622, proposed a system and method for detecting lines in medical images. In their method, a direction image array and a line image array are formed by filtering a digital image with a single-peaked filter, convolving the regular array with second-order difference operators oriented along the horizontal, vertical, and diagonal axes, and computing the direction image arrays and line image arrays as direct scalar functions of the results of the second order difference operations. As best understood, line detection based on the use of four line operator functions requires fewer computations than line detection based on the use of three line operator functions, if the four line operator functions correspond to the special orientations of 0, 45, 90 and 135 degrees.

For the issue of FP reduction, a paper by Zhang et al. ("A New False Positive Reduction Method for MCCs Detection in Digital Mammography," Acoustics, Speech and Signal Processing 2001, Proc. IEEE Intl. Conf. on (ICASSP), V. 2, Issue 2001, pp. 1033-1036, 2001) describes a mixed feature multistage FP reduction algorithm utilizing eleven features extracted from spatial and morphology domains. These features include gray-level description, shape description and clusters description but no feature is directly related to linear structures. Wai *et al.* mention in their article that the results from the multi-resolution ridge detector could be beneficial to microcalcification false-positive reduction but the realization of the reduction is absent. Moreover, it is computationally inefficient to generate actual linear structures just for the purpose of confirming the association of an MCC candidate cluster with a linear structure in mammography CAD.

Therefore, a need exists for an improved approach for image linear structure verification in mammography.

The present invention is designed to overcome the problems set forth above. More particularly, with the present invention, all MCC candidate clusters are assumed being associated with linear structures until verified otherwise. Therefore, the present invention provides a method for linear structure (LS) verification in mammography CAD systems with the objective of reducing microcalcification (MCC) false-positives. The method of the invention is MCC cluster driven method and verifies linear structures with a small rotatable band centered around a given MCC candidate cluster in question. The classification status of an MCC candidate cluster is changed if its association with a linear structure is confirmed through the LS verification. There are mainly four identifiable features that are extracted from the rotatable band in the gradient magnitude and Hough parameter spaces. The LS verification process applies cascade rules to the extracted features to determine if an MCC candidate cluster resides in a linear structure area.

## SUMMARY OF THE INVENTION

Briefly summarized, according to one aspect of the present invention, the invention provides a method for verifying linear structures in a digital mammographic image. One embodiment of the method comprises steps of: providing a configurable linear structure verifier in mammography CAD system, optionally using an MCC candidate cluster driven linear structure verification methodology; selecting parameters for the linear structure verifier from a plurality of different parameter generating sources, at least one of which is controllable by human input; configuring the verifier according to selected parameters; and verifying linear structure using cascade rules. The cascade rules may be trained with a combination of mammographic images of cancer cases and mammographic images of normal cases.

According to another aspect of the invention, the invention resides in a method of an MCC candidate cluster driven linear structure verification in mammographic images. One embodiment of the method includes the steps of locating a plurality of MCC candidate clusters whose characteristics resemble that of true MCC clusters; extracting rotatable bands in the mammographic image with the geometric parameters of the MCC candidate clusters; processing the rotatable bands to verify the presence of linear structures; attaching a tag to a cluster if the verification process determines that linear structures are present; further analyzing the rotatable bands; and removing the tag if the analysis process concludes that said tag is attached incorrectly.

In the various embodiments of the inventive method, the mammographic image may be a digitized X-ray film mammogram, or a digital mammogram captured with a computerized radiography system, or a digital mammogram captured with a digital radiography system.

These and other aspects, objects, features and advantages of the present invention will be more clearly understood and appreciated from a review of the following detailed description of the preferred embodiments and appended claims, and by reference to the accompanying drawings.

## BRIEF DESCRIPTION OF THE DRAWINGS

The foregoing and other objects, features, and advantages of the invention will be apparent from the following more particular description of the embodiments of the invention, as illustrated in the accompanying drawings. The elements of the drawings are not necessarily to scale relative to each other.

FIG. 1 is an illustration of an embodiment of the method of the invention for image linear structure verification in medical imaging.

FIGS. 2A and 2B are illustrations of exemplary workflows of an embodiment of the method of the current invention.

FIG. 3 is an illustration of an embodiment of the method of the invention using an MCC candidate cluster driven linear structure verification in mammographic images.

FIGS. 4A and 4B respectively show a mammogram and an enlarged region of interest in the mammogram illustrating exemplary MCC candidate clusters.

FIG. 5 shows an enlarged region of interest of a mammogram and illustrates a design to compute an eigenvalue band integral profile for an object in the mammogram according to an embodiment of the invention.

FIGS. 6A and 6B are illustrations respectively of an image that has convex and concave surface parts and an image of corresponding eigenvalues.

FIGS. 7A and 7B are illustrations respectively of an exemplary band that covers an object in a region of interest in a digitized mammogram and the corresponding actual eigenvalue band integral profile.

FIG. 8 is a flowchart showing exemplary steps of linear structure verification of the present invention.

FIGS. 9A and 9B are illustrations respectively of exemplary regions of interest in the gradient magnitude space.

FIGS. 10A and 10B are illustrations of graphs of rotatable bands.

FIGS. 11A and 11B display respectively an exemplary region of interest with ring-like structure and a graph illustrating a ring-like structure search method.

FIG. 12 is an illustration of an exemplary band that covers a blood vessel in a region of interest in a digitized mammogram.

FIGS. 13A and 13B are respectively graphs illustrating exemplary curves of ensemble average of sets of lines at different angles.

FIG. 14 is a graph illustrating an exemplary distribution of features related to ensemble average of lines.

FIGS. 15A and 15B, 15C and 15D illustrate respectively exemplary regions of interest and their corresponding Hough accumulators.

FIG. 16 is a graph illustrating an exemplary distribution of features related to Hough accumulator.

FIG. 17 is an illustration of exemplary mammograms with linear structures.

FIG. 18 is a graph illustrating an exemplary result of applying the algorithm of the present invention to a plurality of mammograms.

## DETAILED DESCRIPTION OF THE INVENTION

The following is a detailed description of the preferred embodiments of the invention, reference being made to the drawings in which the same reference numerals identify the same elements of structure in each of the several figures.

Reference is made to commonly assigned, copending U.S. Patent Application Serial No. 11/834,243 filed August 6, 2007 by Chen et al entitled LINE STRUCTURE DETECTION AND ANALYSIS FOR MAMMOGRAPHY CAD.

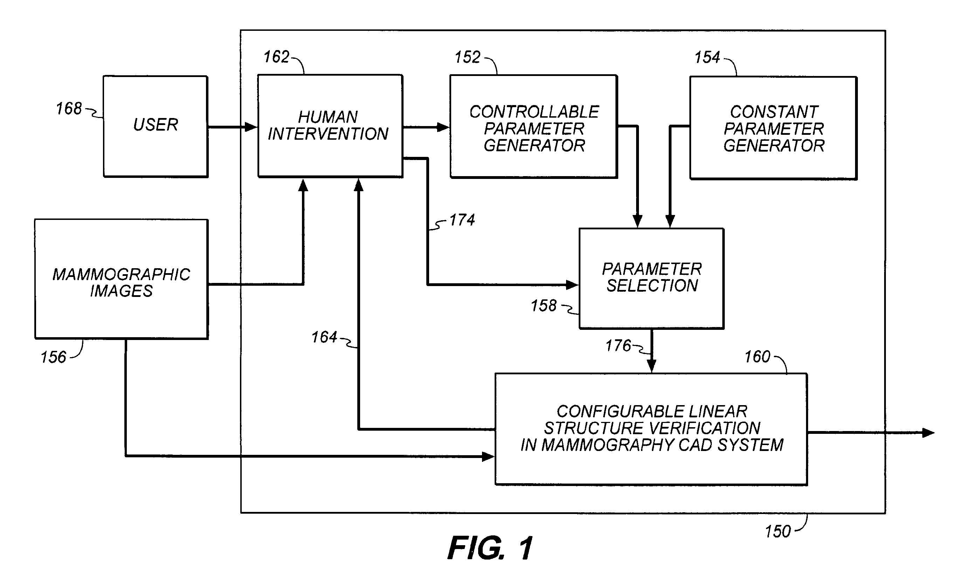

Referring to Fig. 1, the method of the present invention will be outlined. Fig. 1 is a work flow chart **150** illustrating an embodiment of the linear structure verification method of the present invention. There are many variations in appearance of linear structures in mammograms in terms of contrast, brightness, texture and morphological shapes, among others. Therefore, in a practical image processing system it is desirable, as one measure, to synergistically integrate the skills of the human operator of the system with the power of the computer in the process of linear structure verification. A typical human excels in creativity, use of heuristics, flexibility and common sense; while a computer excels in speed of computation, strength and perseverance. This synergy of human and computer can be realized by incorporating a verification parameter control into the process.

In Fig. 1, there are provided steps of parameter selection **158** and human interventions **162** that allow a human operator or user **168** to participate in the process loop. Parameter selection step **158** allows selection of a set of parameters either from a constant parameter generator **154** or a controllable parameter generator **152**. Parameter selection step **158** sends the selected parameters to a configurable linear structure verification step **160** through a forward path **176**. Controllable parameter generator **152** is manipulated by operator **168** through a human intervention step **162.** Operator **168** receives information on mammographic images from input **156** or feedback on path **164** from verification step **160.** Then the operator makes a decision to use parameters either from constant parameter generator **154** or from controllable parameter generator **152.**

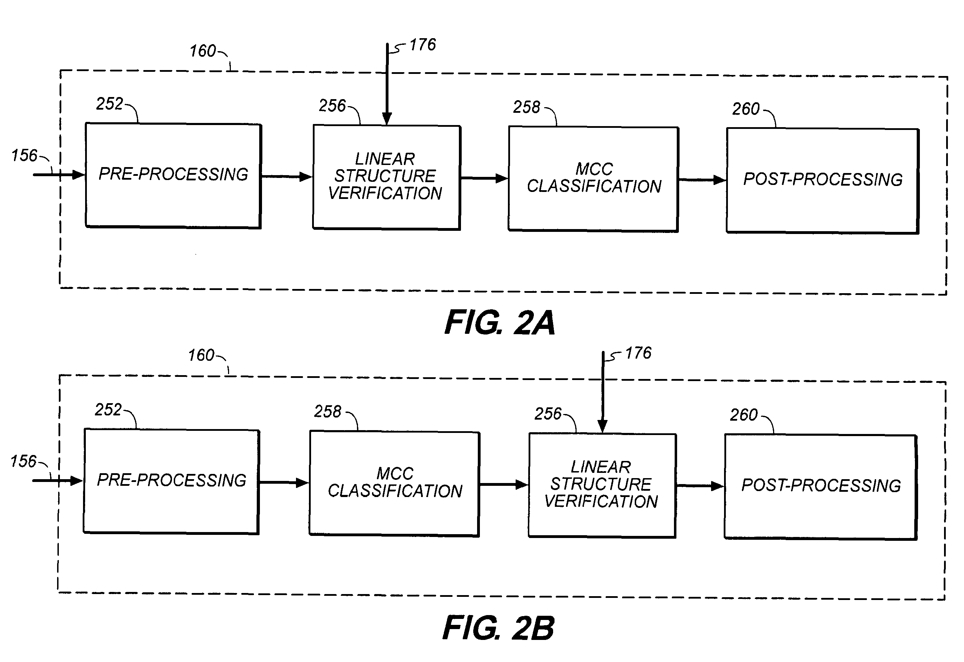

A feature of the present invention is that it provides an integrated solution to the linear structure verification problem by constructing a configurable verification system with a configurable verifier. This configurable system can be configured or reconfigured by commands from operator **168** through a command path **174.** In general, the configurable verifier can be used in different positions in a workflow (or equivalently, forming different workflows). Exemplary workflows for verification step **160** are depicted in Figs. 2A and 2B. In Fig 2 A, mammographic images on input **156** are first processed in pre-processing step **252** that applies various image processing algorithms such as filtering, morphological processing, feature extraction, etc. to the incoming images to form microcalcification clusters. Referring to Fig. 2A, for a first exemplary workflow from verification step **256** to MCC classification step **258,** the microcalcification clusters enter step **256** followed by step **258** that classifies microcalcification clusters into malignant or benign types. However, MCC classification itself is not the focus of the present invention. The above described workflow is a type of pre-classification linear structure verification. Referring to Fig. 2B, for a second exemplary workflow, the microcalcification clusters enter the classification step **258** first, followed by the linear structure verification step **256**. This is a type of post-classification linear structure verification. The output from either of the exemplary workflows goes to a post-processing step **260** that consolidates cancer detection results from other detection modules (such as mass lesion detection, not discussed in the present invention) in the mammography CAD system.

The use of the first exemplary workflow (**256** to **258**) reduces the computational burden of step **258** in terms of the number of MCC clusters to be classified since step **256** removes a sizable quantity of MCC clusters from the candidate list. It does, however, require the CAD classifier in step **258** to be retrained if the linear structure verification (**256**) is an add-on step. The use of the second exemplary workflow (**258** to **256**) enables a kind of 'plug and play' feature for the mammography CAD system if linear structure verification step **256** is an add-on step. It does not require the CAD classifier in step **258** to be retrained. Linear structure verification step **256** only processes those MCC clusters that are classified as true positives by MCC classification step **258.**

Persons skilled in the art understand that a mammography CAD system can be designed in such a way that the functionalities provided by linear structure verification step **256** can be part of the functionalities provided by the MCC classification step **258.** In other words, steps **256** and **258** can be combined into a single unit. Persons skilled in the art can design an MCC classifier or the equivalent that has the capability of verifying linear structures for use in accordance with the present invention. In other words, linear structure verification step 256 and MCC classification step **258** can be combined into a single process. Known examples of linear structure verification are found in the published U.S. patent application of Schneider, et al, previously mentioned. An example of a classification step for MCC is described in an article entitled "Automatic detection of clustered microcalcifications in digital mammograms using mathematical morphology and neural networks", by Stelios Halkiotis et al., Signal Processing, Volume 87, Issue 7, July 2007.

In step **256,** the linear structure verifier itself can be configured or reconfigured to have various functional combinations by commands from operator **168** through command path **174** via parameter selection step **158.** Step **158** sends the selected parameters to step **160** through path **176.** For example, to be detailed later, the linear structure verifier for step **160** can be configured so that a function of true positive protection is activated in the linear structure verification process. The linear structure verifier can also be configured by commands from operator **168** so that different operational points can be realized. Exemplary operational points are numerical thresholds that are used in cascade rule based verification.

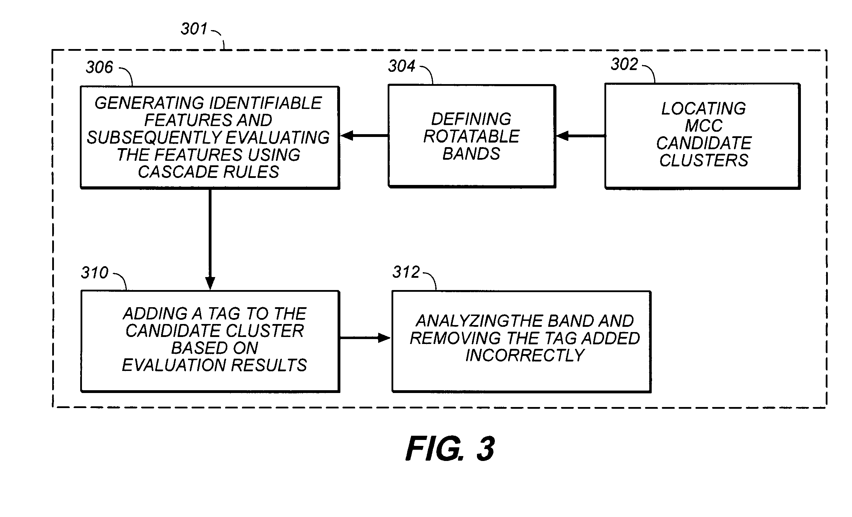

FIG. 3 depicts an embodiment of a method according to the invention of a workflow **301** for an MCC candidate cluster driven, linear structure verification in mammographic images. An exemplary linear structure verifier includes algorithm steps **302, 304, 306, 310** and **312** and can be used in step **160.** Step **302** receives mammographic images which can be digitized X-ray film mammograms, digital mammograms captured with computerized radiography systems or mammographic images captured with digital radiography systems. In Step **302,** a plurality of image processing and computer vision procedures are applied to the input mammographic images to find clusters of connected pixels that present characteristics which are similar to that of microcalcification in the mammogram. Exemplary characteristics can be statistical moments derived from pixel values in intensity (including intensity derivatives), spatial frequency, and topological domains. Step **302** forms candidate clusters using the clusters of connected pixels found. The clusters of connected pixels are also called microcalcification candidate spots. Each candidate cluster formed in Step **302** has a plurality of microcalcification candidate spots that are close to each other within a certain distance.

In step **304,** rotatable bands are defined with the geometric parameters of the MCC candidate clusters located in the image. The defined bands enclose all or part of the microcalcification candidate spots of the candidate clusters. In step **306,** various algorithms are applied to the rotatable band to determine if linear structures present. An exemplary algorithm is the cascade rule based evaluation of features extracted from rotatable bands discussed in the present invention. An exemplary technique is described in detail later in this specification. The classification of MCC as a potential cancerous site is desirable. However, the configuration of multiple sites can be indicative of normal or non-cancerous condition. This subsequent analysis is further requirement and is not in conflict with the classification process. Step **310** attaches a tag to the candidate cluster based on the evaluation results in step **306.** The tag signifies the presence of linear structures. Step **312** further analyzes the band with image analysis algorithms such as topological analysis to assess the correctness of the tag. The tag will be removed if it is attached to the cluster incorrectly.

Curvilinear structures appear in the mammographic images due to the curvilinear appearance of blood vessels, lactation ducts, and ligaments of the breast as projected on a mammogram. Vascular lines are large calcified blood vessels on a mammogram. Microcalcifications are bright spots on mammograms and usually the only signs indicating early breast cancers. Microcalcification spots appear usually in clusters, and malignant microcalcification spots usually have irregular shapes. The curvilinear structure is a net of massive and complex curvilinear markings on a given mammogram. Due to the projection of three-dimensional breast into a two-dimensional mammogram, different parts of the curvilinear structure may have different appearances with varying width, lengths and different contrasts to the surrounding breast tissue. The option of pre-classification global mask generation to extract curvilinear structure may be of limited use because global curvilinear marking is a massive structure, and accurate mask extraction is not an easy task. Global mask tends to extract only small portion of linear structure or extract too many "lines".

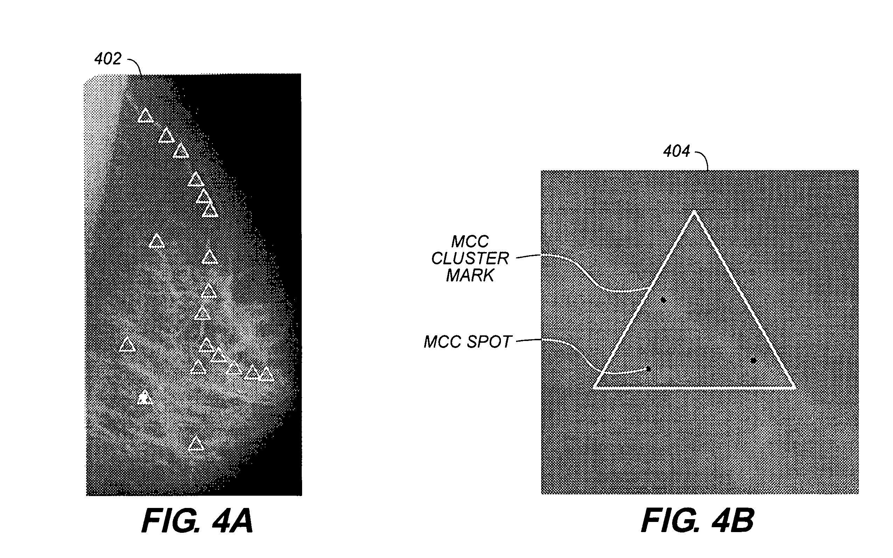

In accordance with the invention, an alternative is, after initial MCC candidate classification, to identify linear structures only in the neighborhood where the MCC candidate clusters reside. For each of the candidate clusters that have passed initial classification, a region of interest (ROI) is defined that encloses the MCC candidate spots of each of the candidate clusters. An MCC FP reduction procedure is applied to a small region (ROI) centered around each MCC candidate cluster to avoid the unnecessary influence from the rest of the breast. It reduces processing time since the number of MCC candidate clusters is limited and only a small portion of the breast area needs to be processed, in comparison to global line mask approach. Figure 4A shows an exemplary mammogram **402** with small triangles that indicate the MCC candidate clusters identified as previously described in the pre-processing state. Figure 4B shows an enlarged image **404** of the ROI that contains one of the MCC candidate clusters. The MCC FP reduction procedure will be applied to only a fraction of all MCC candidate clusters **402** indicated in Figure 4A.

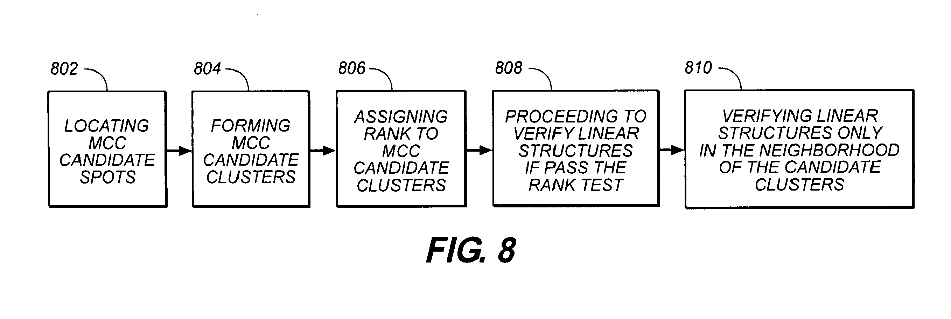

The workflow depicted in Figure 8 outlines the algorithm steps needed to perform a reduction of MCC FP and explains the functions of steps 252, 258 and 256 of Figure 2B. In step **802** digital mammograms are processed to locate MCC candidate spots and detect the potential cancerous MCC spots. Step **804** groups MCC candidate spots into MCC candidate clusters with a minimum number of 2 or 3 MCC candidate spots within an area approximately 6 mm x 6 mm in size. The number of MCC candidate clusters allowed is limited to, *e.g.*, 30 per image. Those candidates usually appear as the bright spots on a mammogram. But there are certain other types of bright spots that are false-positive, such as large benign calcifications, calcifications within the arterial walls, bright glandular tissues, film artifacts or mammogram markers. These types of false-positive usually present difficulty for later processing in the MCC classification algorithm, so they should be limited. In **806,** the MCC candidate clusters are classified or ranked by a classifier such as a neural network that is pre-trained. This classification process can be followed by another process that applies a set of rules to each candidate cluster after classification. The result of the rule, if true, is to set the candidate rank to normal.

As stated previously, not all MCC candidate clusters are subject to linear structure verification. A test in step **808** evaluates the rank of each MCC candidate cluster after classification and sends those candidate clusters that are classified as abnormal to the linear structure verification step **810.** Note that in Figure 4 the MCC candidate clusters **402** indicated by small triangles include those classified as normal as well as abnormal.

The MCC cluster driven linear structure verification method of the present invention employs mainly four identifiable features that are extracted from the gradient magnitude and Hough parameter domains. The linear structure verification process applies cascade rules to the extracted features to determine if an MCC candidate cluster is associated with a linear structure. The method is discussed in depth next.

### Features of Ensemble Average of Lines in Gradient Magnitude Space

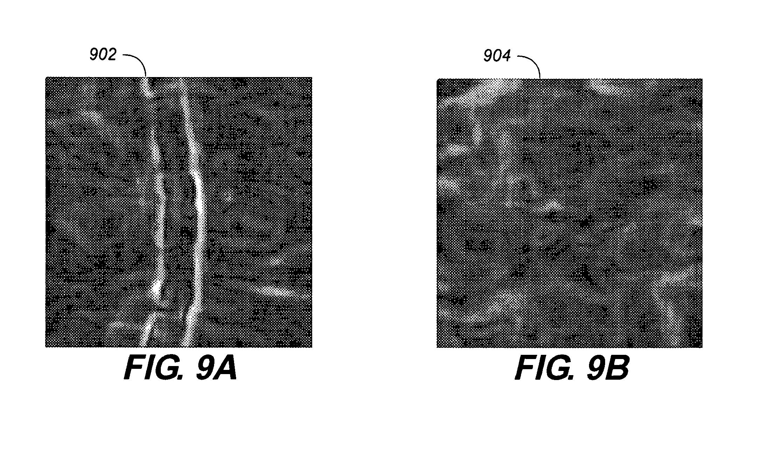

In the linear structure verification step, an intensity ROI **404** as in Figure 4 is transformed to a gradient magnitude ROI (gROI). The benefit of working in the gradient magnitude space is that the statistics gathered from gROI are essentially intensity invariant. Figures 9A and 9B display a pair of exemplary gROIs **902, 904** used in the present algorithm. Note that the position and size of an ROI are determined by the positions of the underlying MCC candidate spots that the cluster contains. As stated before the design philosophy in the present invention is that all MCC candidate clusters are assumed being associated with linear structures until verified otherwise. The verification process starts with extracting information from a rotatable band that covers all or part of candidate spots in the MCC candidate cluster under investigation.

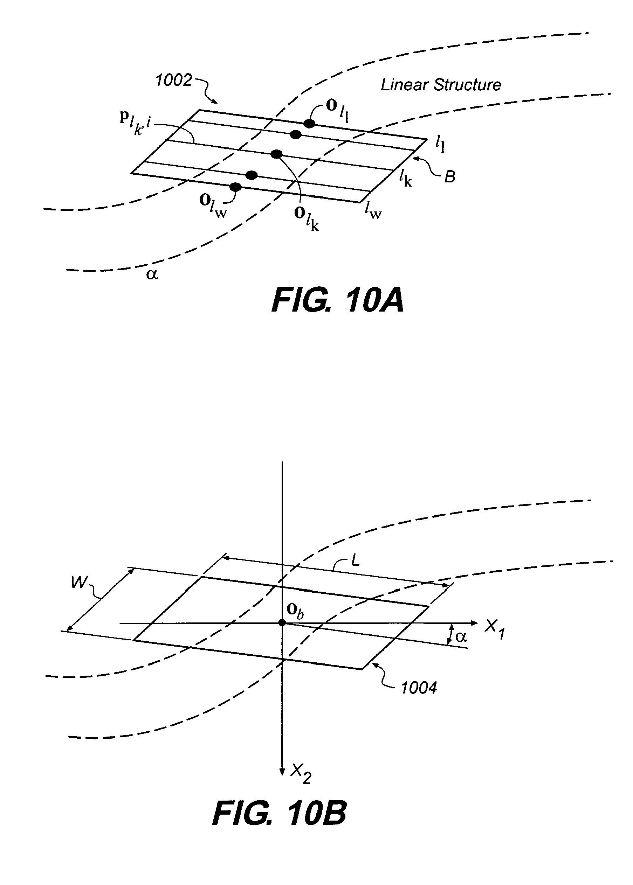

Figures 10A and 10B respectively depict graphs or sketches **1002, 1004** of linear structures, each with a rotatable band. For analytical purposes, in graph **1004** define the band center $\mathbf{o}_b$ as the origin of a local coordinate system ($X^1, X^2$) whose axes are parallel to the image (gROI) coordinate system axes which are generally parallel to the vertical and horizontal edges of the image respectively. Angle $\alpha$ determines the band orientation with respect to the local coordinate system.

Denote the rotatable verification band by $\mathbf{B}(\alpha)$ that contains w lines $\mathbf{l}_k(\alpha)$:

$$\mathbf{B}(\alpha) = \{\mathbf{l}_k(\alpha)\}; k \in [1, \cdots, W] \qquad (1)$$

Denote the line center of line $\mathbf{l}_k(\alpha)$ by $\mathbf{o}_{l_k}$. Denote a pixel on line $\mathbf{l}_k(\alpha)$ by $\mathbf{p}_{l_k,i}(\alpha)$. Line $\mathbf{l}_k$ is a collection of pixels: $\mathbf{l}_k = \{\hat{l}(\mathbf{p}_{l_k,j}(\alpha))\}, i \in e[-(L-1)/2, \cdots, (L-1)/2]$, L is the line length. Here $\hat{l} = |\nabla l|$ is the gradient magnitude image (gROI) of the intensity image (ROI) denoted by *l*. In the graph 1004 displayed in Figure 10, the band is in a position where lines $\mathbf{l}_k$ are approximately perpendicular to the medial axis of the linear structure. For notation simplicity, parameter $\alpha$ is omitted in some of the expressions in the following discussions.

Denote an ensemble average of the set of lines $\{\mathbf{l}_k\}$ in the band by $\mathbf{s}(\alpha)$ with elements $s_i(\alpha)$: $\mathbf{s}(\alpha) = \{s_i(\alpha)\}$, where

$$s_i = \frac{1}{W} \sum_{k=1}^{W} \hat{l}(\mathbf{p}_{l_k,i}) \qquad (2)$$

Referring back to Figures 10A and 10B, the pixel coordinate $\mathbf{p}_{l_k,i}$ can be computed as

$$\mathbf{p}_{l_k,i} = i\mathbf{f}_l + \mathbf{o}_{l_k};$$

where the centers $\mathbf{o}_{l_k}$ are obtained through

$$\mathbf{o}_{l_k} = k\mathbf{f}_b + \mathbf{o}_b; k \in \left[-(W-1)/2, \cdots, (W-1)/2;\right];$$

$$\mathbf{o}_b = \begin{bmatrix} o_b^{x^1} \\ o_b^{x^2} \end{bmatrix}; \mathbf{f}_b = \begin{bmatrix} f_b^{x^1} \\ f_b^{x^2} \end{bmatrix} = \begin{bmatrix} \sin(\alpha) \\ \cos(\alpha) \end{bmatrix}; \mathbf{o}_{l_k} = \begin{bmatrix} o_{l_k}^{x^1} \\ o_{l_k}^{x^2} \end{bmatrix}; \mathbf{f}_l = \begin{bmatrix} f_l^{x^1} \\ f_l^{x^2} \end{bmatrix} = \begin{bmatrix} \cos(\alpha) \\ -\sin(\alpha) \end{bmatrix}.$$

Those skilled in the art may notice that the bands $\mathbf{B}(\alpha)$ at different angles are not extracted through the conventional method of interpolation but through a simple sampling procedure that is quite adequate for the present application.

Various features can be generated from the processing of the bands. Two main features are introduced in the present invention. One of the features is a maximum relative magnitude of the ensemble average curves. The relative magnitude of the ensemble average curve of a set of lines in the band at a particular angle is simply defined as

$$\Psi(\alpha) = \max(\mathbf{s}(\alpha)) - \min(\mathbf{s}(\alpha)) = \max_i(s_i) - \min_i(s_i).$$

In practice, angle $\alpha$ is chosen at a few discrete orientations. Therefore, the relative magnitude of the ensemble average curve can be expressed as $\Psi(\alpha_j) = \max(\mathbf{s}(\alpha_j)) - \min(\mathbf{s}(\alpha_j)); j \in [1, \cdots, N_\alpha]$. It can be further simplified as $\Psi_j = \max(\mathbf{s}_j) - \min(\mathbf{s}_j); j \in [1, \cdots, N_\alpha]$.

The maximum relative magnitude of the ensemble average curve is then obtained as

$$\Psi = \max_j(\Psi_j). \qquad (3)$$

Accordingly, band $\mathbf{B}_j$ that produces maximum relative magnitude is denoted by $\mathbf{B}_\Psi$.

With the relative magnitude of the ensemble average curve, another feature, ensemble average ratio $\mathfrak{R}$ can be computed as:

$$\mathfrak{R} = \max_j(\Psi_j) / \min_j(\Psi_j). \qquad (4)$$

It will be clear that if an MCC candidate cluster is not associated with a linear structure the ensemble average ratio $\mathfrak{R}$ is close to 1, which signifies the 'isotropic' nature of the underlying structure measured by using the ensemble averaging. On the other hand, if an MCC candidate cluster is associated with a linear structure the ensemble average ratio $\mathfrak{R}$ moves away from 1, which signifies the 'anisotropic' nature of the underlying structure.

**Features in Hough Transformation Domain**

Two features from the Hough Transformation domain are used in the linear structure verification process in the present invention. It will be detailed later that the present method utilizes a set of cascade rules to accomplish the verification task. The relative magnitude of the ensemble average curve and the ensemble average ratio are the first two features that are evaluated. This first evaluation process tags a cluster with a status of being associated with linear structures (LS), not being associated with linear structures (non-LS), or uncertain. As a result, any MCC candidate cluster in an uncertain status will be further evaluated by the rules that are applied to the features of Hough parameters.

The first evaluation operation on ensemble averages is, in general, not orthogonal to the second evaluation operation on Hough parameter in the present application. In other words, these two operations may explore the same underlying evidence to support the linear structure verification process. It is true, however, from the computational complexity point of view, that the computation of ensemble averaging is linear while Hough Transformation is nonlinear in nature. Also, the execution of ensemble averaging of lines in multiple angles is applied to all MCC candidate clusters. The Hough Transform is only applied to a handful clusters (gROIs) in a single angle position that is determined by the first evaluation operation of ensemble averaging of lines in the rotatable band.

Those skilled in the are understand that Hough Transform maps points on a line in Cartesian space to curves (sinusoids) in the Hough parameter space. Points that are collinear in the Cartesian space generate curves that intersect at a common point (forming a peak in the Hough parameter space).

Referring to Figure 10, each point $\mathbf{p}_{l_k,i}$ in band $\mathbf{B}(\alpha)$ that has a Cartesian coordinate is transformed into a discretized $(r,\theta)$ curve in Hough parameter space; where $r$ is the length of a normal from the origin to line in band $\mathbf{B}(\alpha)$ and $\theta$ is the orientation of the normal with respect to the $X^1$ axis.

For the exemplary gROI **902** shown in Figure 9A, there will be two high peaks in the Hough parameter accumulator array indexed with discretized $r$ and $\theta$. These two peaks will appear approximately at the same angle $\theta$ but at different $r$ lengths. It is therefore a feature (or measure) of "angle spread" $\delta_\theta$ is defined as following.

Denote the Hough peak array by $\mathbf{H} = \{h_{i,j}\}$ and its corresponding angle array by $\Theta) = \{\theta_{i,j}\}$; where $i \in [1,\cdots,N_r]$; $j \in [1,\cdots,N_\theta]$. $N_r$ is the number of quantized length intervals and $N_\theta$ is the number of quantized angle intervals.

Collect a subset $\mathbf{H}^s = \left\{h_{i,j}^s\right\}$ of $\mathbf{H}$; the elements $h_{i,j}^s$ all have values above $\aleph$ percent of the highest peak value in $\mathbf{H}$. Corresponding to the subset $\mathbf{H}^s$, there is a subset $\Theta^s = \left\{\theta_{i,j}^s\right\}$ of $\Theta$. The angle spread $\delta_\theta$ can be readily computed as

$$\delta_\theta = \left|\max_s\left(\Theta^s\right) - \min_s\left(\Theta^s\right)\right| \cdot \qquad (5)$$

If there are parallel thin lines presented in a band $\mathbf{B}(\alpha)$, the angle spread $\delta_\theta$ for that band must be zero or close to zero. On the other hand, if random structures are presented in a band $\mathbf{B}(\alpha)$, the angle spread $\delta_\theta$ will be large.

Another feature from Hough space is the normalized maximum Hough peak that is simply defined as

$$\varphi_h = \max_{i,j}\left(h_{i,j}^s\right) / sum(h_{i,j}) \cdot \qquad (6)$$

**Additional Measure for TP Protection**

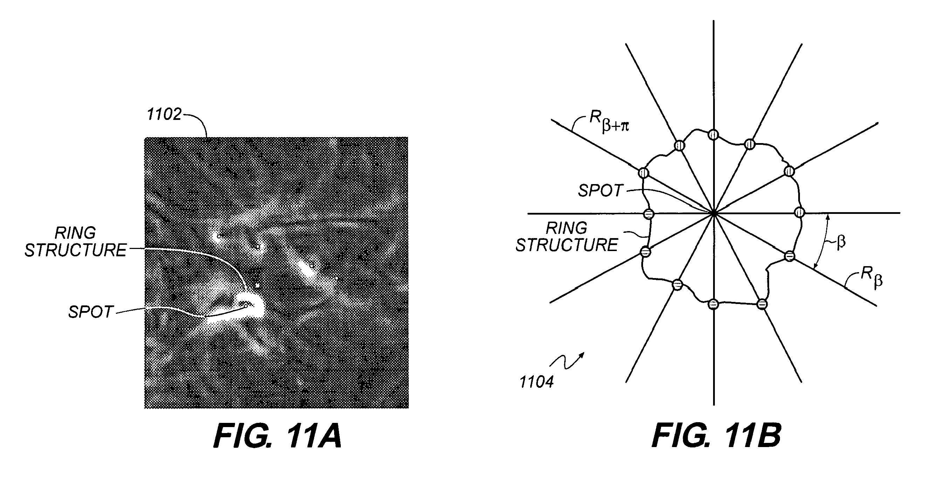

The inventors have observed that some of the true-positive MCC clusters may reside in an area where linear structure-like objects are present and can be verified as FPs. It also has been observed that true-positive MCC clusters may possess topological ring-like structures surrounding some of the spots (see a gROI **1102** in Figure 11A). A method in accordance with one embodiment of the invention is hence crafted to take advantage of the ring structure in a cluster to protect true positives.

Using the spot as the origin, perform a search along a ray that radiates from the origin until the ray hits the ring or reaches a predefined distance without a hit. The search process can be formulated as following (referring to graph **1104** in Figure 11B).

Denote a ray by $R_{k\beta}$ and its opposite ray by $R_{k\beta+\pi}$, where $\beta=\pi/N_R; k\in[1,\cdots,N_R]$. $N_R$ is a positive integer greater than one. Denote a hit array by $\mathbf{T} = \{t_k\}$. The array elements $t_k$ are initialized as zero. Only if both $R_{k\beta}$ and $R_{k\beta+\pi}$ hit a ring, the corresponding array element $t_k$ will be set to one, otherwise, the corresponding array element $t_k$ remains zero.

A simple measure is therefore defined as the sum of hits $\xi_t$ that a hit array has. The measure is simply computed as

$$\xi_t = \sum_k t_k \, . \qquad (7)$$

## Cascade Rule Based Linear Structure Verification

The features (or measures) described in the above sections are used in a cascade rule based verification algorithm that is summarized below. The paragraphs following the algorithm summary explain the workings of the algorithm:

$$
\begin{aligned}
&\textbf{for each}_{\,clst}\ \textbf{do}\\
&\quad \textbf{if}(_{rankChk\,(clst,\,rankThd\,)})\\
&\qquad gROIgnrt(clst,img,gROI)\,;\\
&\qquad \textbf{for each}\ \alpha_j\ \textbf{where}\ j \in [1,\cdots,N]\,\textbf{do}\\
&\qquad\quad bandXtrct(clst,gROI,\mathbf{B}_j,\alpha_j)\,;\\
&\qquad\quad bandPfling(\mathbf{B}_j,\mathbf{s}_j)\\
&\qquad \textbf{end}\\
&\qquad profileFeatureXtrct(\forall \mathbf{s}_j,\Psi,\Re)\,;\ \textbf{where}\ j \in [1,\cdots,N]\\
&\qquad apply\,\mathrm{Pr}\,ofileRules\,(clst,\Psi,\Re)\,;\\
&\qquad \textbf{if status}(_{clst})\ \textbf{== uncertain}\\
&\qquad\quad bandHoughTrnsfm(\mathbf{B},\mathbf{H},\Theta)\,;\\
&\qquad\quad HoughFeatureXtrct(\mathbf{H},\Theta,\delta_\theta,\varphi_h)\,;\\
&\qquad\quad applyHough\,Rules\,(clst,\delta_\theta,\varphi_h)\,;\\
&\qquad \textbf{end}\\
&\qquad \textbf{if status}(_{clst})\ \textbf{== LS}\\
&\qquad\quad ringHitChk(clst,gROI,\xi_t)\,;\\
&\qquad\quad applyRingHitRules(clst,\xi_t)\,;\\
&\qquad \textbf{end}\\
&\quad \textbf{end}
\end{aligned}
$$

Function *rankChk*(*clst,rankThd*) returns a Boolean 'true' if an MCC cluster *clst* has a rank indicating its potential cancer status by comparing with a predefined threshold value *rankThd* based on the analysis of classification ROC curve.

Function *gROIgnrt*(*clst,img,gROI*) simply crops a region of interest (*gROI*) from the input gradient magnitude mammogram (*img*) using the position information of the underlying cluster (*clst*). The size of the gROI depends on the spread of MCC spots within the cluster.

Function *bandXtrct*(*clst,gROI*,$\mathbf{B}_j$,$\alpha_j$) further crops a band $\mathbf{B}_j$ at angle $\alpha_j$ from *gROI*. The center of the cropped band is at the geometric center of the spots within the cluster *clst*. In practice, the shape of a band is a square so that two, not one, ensemble average curves of two sets of lines (with respect to $\alpha_j$ and $\alpha_j + \pi/2$) can be computed (see Equation 2) with one band.

Function *profileFeatureXtrct*($\forall \mathbf{s}_j,\Psi,\Re$) collects the ensemble averages and computes features (or measures) $\Psi$ and $\Re$ according to Equations 3 and 4.

Function *apply* Pr *ofileRules*(*clst,* $\Psi,\Re$) evaluates $\Psi$ and $\Re$ with pre-determined boundaries (thresholds) then tags the cluster *clst* with a number indicating the status as '**LS** (associated with linear structure)', 'non-LS (not associated with linear structure)', or 'uncertain'. The evaluation criteria will be detailed later.

If a cluster is labeled as 'uncertain', that cluster will be further evaluated by first applying a Hough Transform *bandHoughTrnsfm*($\mathbf{B},\mathbf{H},\Theta$) to the band and generates a Hough peak array **H** and an angle array $\Theta$. The band **B** used in function *bandHoughTrnsfm*() could be the one (denoted by $\mathbf{B}_\Psi$) that generates the maximum relative magnitude of the ensemble average curve in Equation 3. Or it could be a band having a different (usually larger) size but with the same orientation and center position as $\mathbf{B}_\Psi$.

Function *HoughFeatureXtrct*($\mathbf{H}$,$\Theta$,$\delta_\theta$,$\varphi_h$), executes Equations 5 and 6. Function *applyHoughRules*(*clst*,$\delta_\theta$,$\varphi_h$) evaluates $\delta_\theta$ and $\varphi_h$ with pre-defined thresholds and tags the cluster *clst* with a number indicating the status as 'LS', or 'non-LS'.

If, after evaluating the features of the rotatable bands, a cluster is labeled as LS (associated with linear structure), function *rightHitChk*(*clst*,*gROI*,$\xi_t$) computes $\xi_t$ (see Equation 7) that is evaluated in function *applyRingHitRules*(*clst*,$\xi_t$). It basically checks the number of hits that each of the spots has in a cluster and changes the status from LS to non-LS if the maximum number of hits that any one of the spots has exceeds a threshold. The purpose of employing function *rightHitChk*(*clst*, *gROI*,$\xi_t$) is to analyze the band and the use function *applyRingHitRules*(*clst*,$\xi_t$) to remove the tag LS that is attached incorrectly.

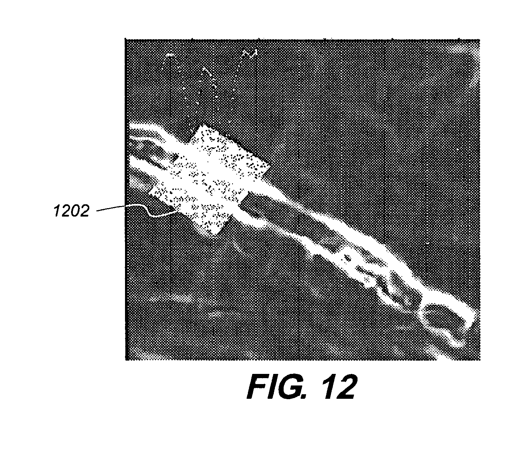

The algorithm developed in the present invention has been applied to clinical mammograms for assessment. Figure 12 shows an exemplary band that covers part of a blood vessel in a gradient magnitude image (gROI).

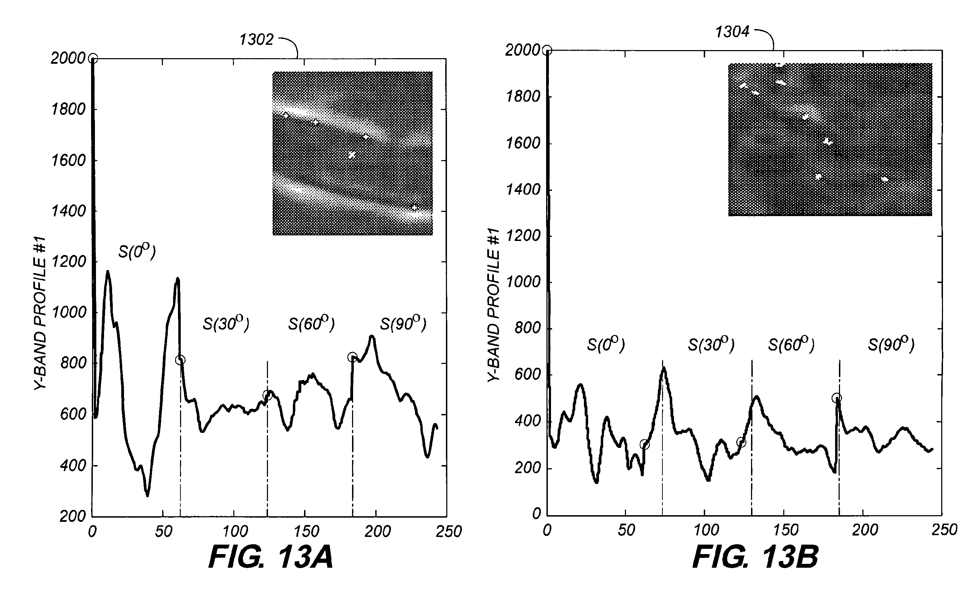

Figures 13A and 13B depict the ensemble averages **1302** s($\alpha$) of band lines at 4 different angles for a gROI that has a linear structure. The ensemble average curve **s**(0˚) at 0˚ has the highest relative magnitude comparing to the other three. These four ensemble average curves possess kind of 'anisotropic' property in terms of the relative magnitude. While the curves in graph **1304** in Figure 13B display near 'isotropic' property for a gROI that does not have a linear structure.

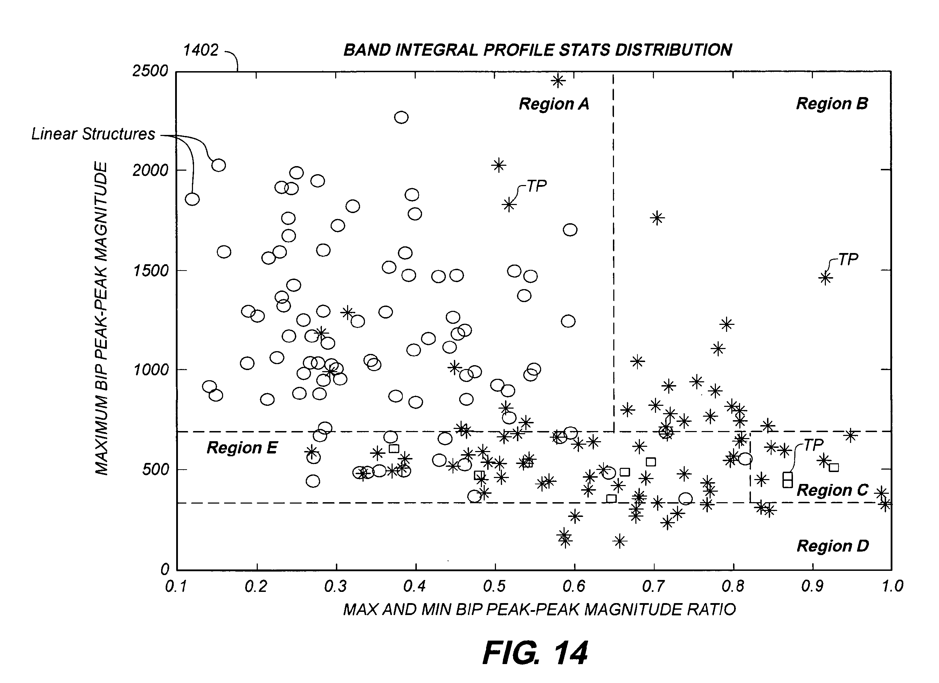

The distribution **1402** of features $\Psi$ and $\Re$ is obtained from a number of training mammograms and shown in Figure 14. It demonstrates that features $\Psi$ and $\Re$ provide a statistically satisfactory separation for the clusters that have linear structures (LS) and the clusters that are true-positives (non-LS). Although sophisticated algorithms such as Support Vector Machine, a conventional pattern recognition technology popular in the field of computer vision, as will be understood by the person skilled in the art, could be used to find the feature separation boundaries, the distribution in Figure 14 is empirically divided into different regions. LS clusters are concentrated in region A, while non-LS clusters spread mostly in regions B, C and D. Region E contains the clusters with uncertain status. Exemplary rules are devised based on the division of the above regions in the present invention for function *apply*Pr *ofileRules*(*clst*,$\Psi$,+$\Re$). Exemplary predefined thresholding values for $\Psi$ are 700 and 300. Exemplary predefined thresholding value for $\Re$ is 0.6.

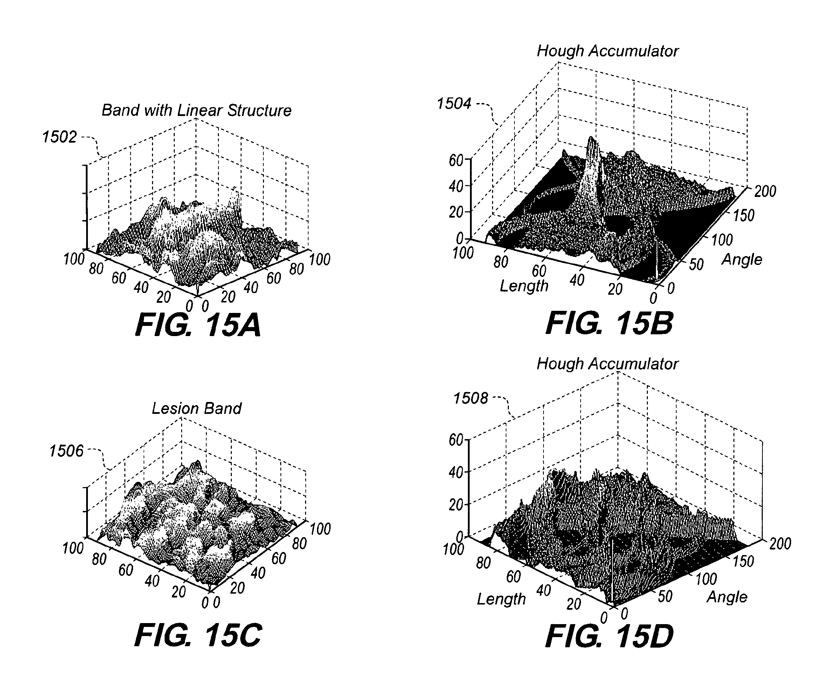

Figures 15A to 15D display the 3D plots of a band **1502** with linear structures and its corresponding Hough accumulator **1504** plot with length *r* and angle $\theta$ axes. Set an exemplary $\aleph$ = 90. Intuitively, the angle spread $\delta_\theta$ for the elements $h_{i,j}^s$ having values above $\aleph$ percent of the highest peak value is very small. While for the lesion band **904** in Figure 9, the angle spread $\delta_\theta$ obviously has a much larger value because of the multiple peaks with similar values sprouted across the angle axis in graph **1508.**

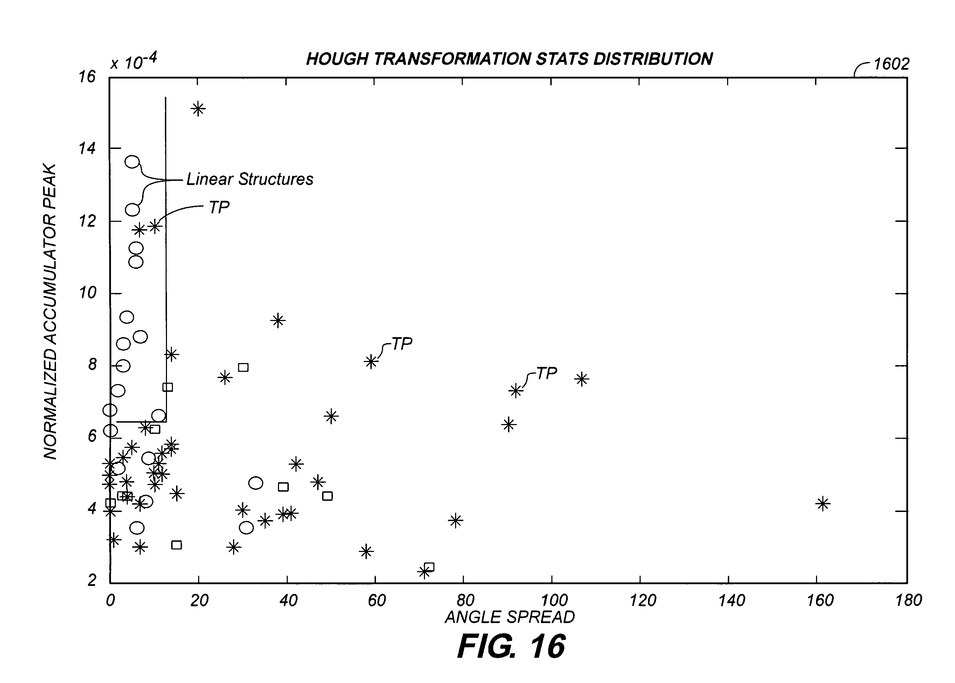

The distribution **1602** of features *r* and $\theta$ in Figure 16 also shows a good separation between the LS clusters and non-LS clusters. The solid lines in Figure 16 provide the empirical thresholds for the execution of function *applyHoughRules*(*clst*,$\delta_\theta$,$\varphi_h$). Exemplary predefined threshold $\delta_\theta$ for is 10 and exemplary predefined threshold for $\varphi_h$ is 0.0005.

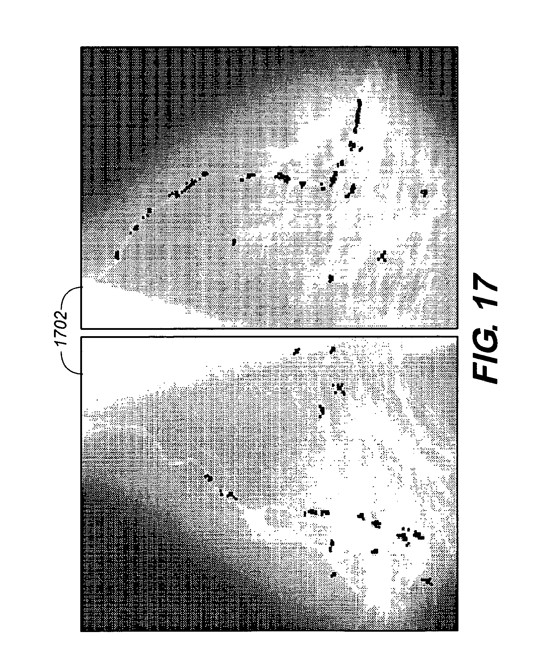

Figure 17 illustrates the result of applying the current FP reduction algorithm to a pair of mammograms **1702** that clearly have linear structures (blood vessels) with MCC candidate clusters attached to them. The encircled dots are the remaining false-positives. The remaining, not circled dots indicate that potential MCC cluster candidates are correctly verified as associated with linear structures. Note that the effect of other classifiers is not shown in Figure 17.

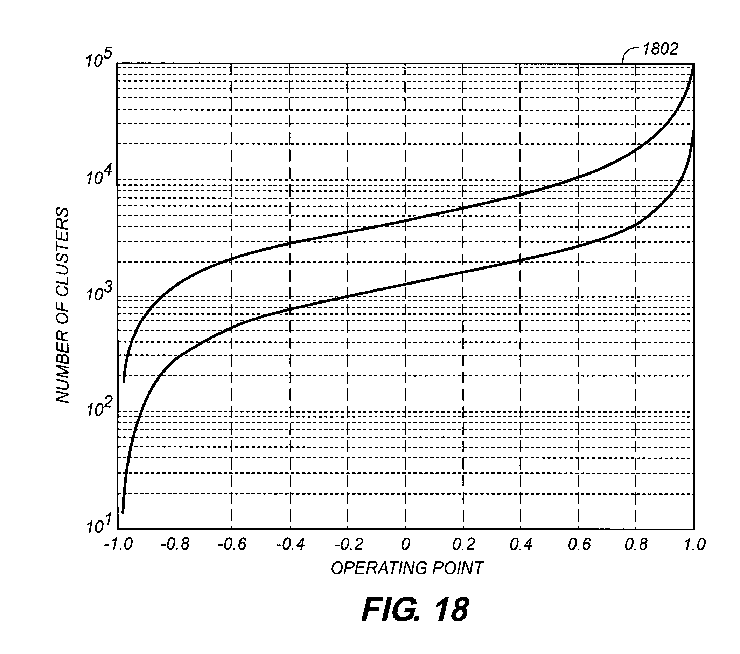

To demonstrate statistical significance of the FP reduction, the present algorithm has been applied to over 5000 normal mammographic images. The upper curve in graph **1802** in Figure 18 reveals the total number of FP clusters before applying the present FP reduction algorithm at different operation points. The lower curve in graph **1802** in Figure 18 shows the total number of clusters that are verified as associated with linear structures. These clusters will be tagged as normal.

As discussed previously with regard to Figures 1, 2A and 2B, the linear structure verifier in step **256** can be configured or reconfigured by commands from the human operator **168** through command path **174** that is connected to parameter selection step **158**. Step **158** sends the selected parameters to step **160** through forward path **176.** For example, the linear structure verifier can be configured so that a step of true positive protection is activated in the linear structure verification process. Exemplary functions contained in the step of true positive protection are *rightHitChk*(*clst, gROI*,$\xi_t$) and *applyRingHitRules*(*clst*,$\xi_t$) that have been described previously. The linear structure verifier can also be configured so that numerical thresholds can be varied. Exemplary numerical thresholds are those used for parameters $\delta_\theta$, $\varphi_h$, $\Psi$ and $\mathfrak{R}$ in the cascade rule based verification algorithm.

Referring again to Figure 1, the workflow **150** always starts off by loading up the constant parameter generator **154** with predefined exemplary values (as shown in earlier parts of this disclosure for the parameters listed in the previous paragraph) for $\delta_\theta$, $\varphi_h$, $\Psi$ and $\mathfrak{R}$. Operator **168** commands the system to select the constant parameters through the steps of human intervention **162** and parameter selection **158**. A feedback path **164** from the verification step **160** provides useful information to the human intervention step **162** (e.g., by displaying of an intermediate result) for seeking either staying on the current course or calling for a change of the operation. If the latter is true, the operator can halt the operation through human intervention step **162** and adjust corresponding parameters $\delta_\theta$, $\varphi_h$, $\Psi$ and $\mathfrak{R}$ (this action is represented by the step of using the controllable parameter generator 152). Then operator 168 commands the system to select the controllable parameters through the steps of human intervention **152** and parameter selection **158.**

The present invention comprises a method and a configurable linear structure verification system that provides a configurable linear structure verifier in mammography CAD system. The verifier parameters for the linear structure verifier are from a plurality of different parameter generating sources, at least one of which is controllable by human input. The present invention also comprises a methodology of MCC cluster driven linear structure verification for MCC false-positive reduction in mammography CAD system. Different from linear structure detection algorithms that are popular in image processing literature, the method of linear structure verification in the present invention requires no actual structural lines to be generated and no re-sampling of images. This results in searching for identifiable information in a target area that is a tiny fraction of a size already limited region of interest. This cluster driven linear structure verification methodology also employs an efficient cascade rule based algorithm that is mostly in linear operation (ensemble averaging). The efficiency and efficacy of the proposed method are demonstrated with the results obtained by applying the LS verification method to over thousand normal cases.

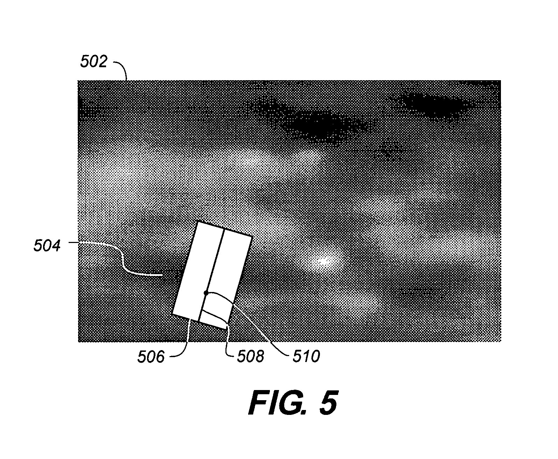

In general, algorithms such as the one in the present invention do not distinguish between concave and convex objects in images. The linear structures to be verified in mammograms usually appear brighter than other background contents. An exemplary ROI **502** is shown in FIG. 5 where an object **504** appears that is not a type of linear structure presently sought. To rule out this type of false line structure, the present invention provides a method of verifying convexity and concavity of detected linear structures. A preferred scheme for verifying convexity and concavity of verified linear structures is an eigenvalue band integral profiling in the present invention.

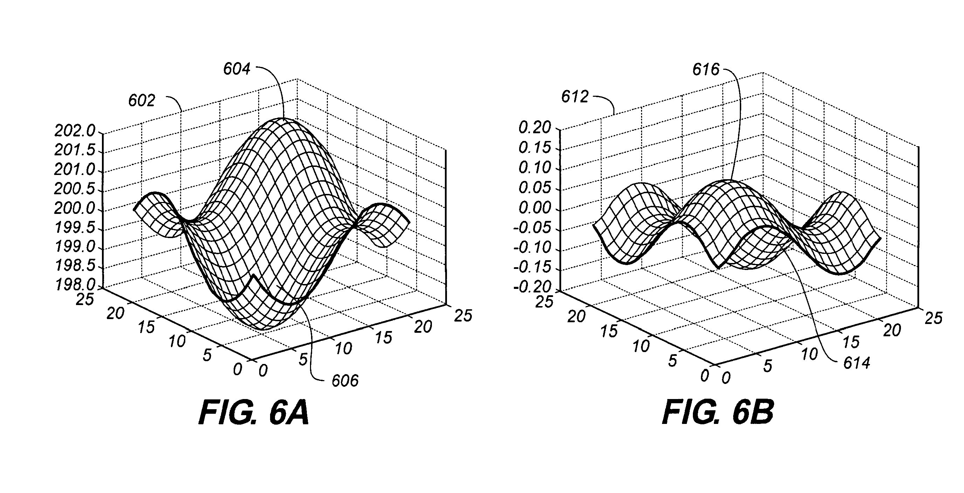

Graph **602** in FIG 6A shows a convex surface **604** and a concave surface **606** illustrating intensity profiles for an arbitrarily defined image. Graph **612** of FIG 6B shows the corresponding eigenvalue profiles of graph **602.** Note that a convex surface **604** has negative eigenvalues **614** and the concave surface **606** has positive eigenvalues **616.** The steps of computing eigenvalues of a surface are described below.

Referring again to FIG. 5, denote ROI **502** by image $I$. Define a band **506** that covers part of the object (surface) **504**. Denote a band line **508** in band **506** by $l_k$. Denote the position of a pixel **510** on line **508** within band **506** by $\mathbf{P}_{l_k,i}$. Denote the code value (intensity) of pixel **510** by $I(\mathbf{p}_{l_k,i})$. Construct a Hessian matrix $H = \{h_{m,n}\}$ for each of the pixels within the band 506 with the formula

$$H\left(I\left(\mathbf{p}_{l_k,i}\right)\right) = \left\{h_{m,n}\right\}, \quad h_{m,n} = \frac{\partial I}{\partial x_m \partial x_n};$$

$m \in [1,2]$; $n \in [1,2]$. Where $x_m$ and $x_n$ signify two orthogonal axes of image $I$, and element $h_{m,n}$ is a partial derivative. Solve the following matrix equation to obtain eigenvalues $\lambda_1$ and $\lambda_2$ for every pixel $\mathbf{P}_{lk,i}$ within band 506:

$$H = \mathrm{E}\Lambda\mathrm{E}^{-1}; \mathrm{E} = [\mathbf{e}_1, \mathbf{e}_2]; \Lambda = \begin{bmatrix} \lambda_1 & 0 \\ 0 & \lambda_2 \end{bmatrix},$$ where $\mathbf{e}_1$ and $\mathbf{e}_2$ are 2 by 1 column vectors (eigen vectors). The sign of the eigenvalues indicates the surface orientation, either concave or convex. In the present invention, to evaluate the surface orientation, a metric, S, is defined as eigenvalue band integral profile to verify object surface property (convexity and concavity). The element of the eigenvalue band integral profile, S, is computed as

$$s_i = \sum_{k=1}^{W} \widetilde{I}\left(\mathbf{p}_{l_k,i}\right),$$

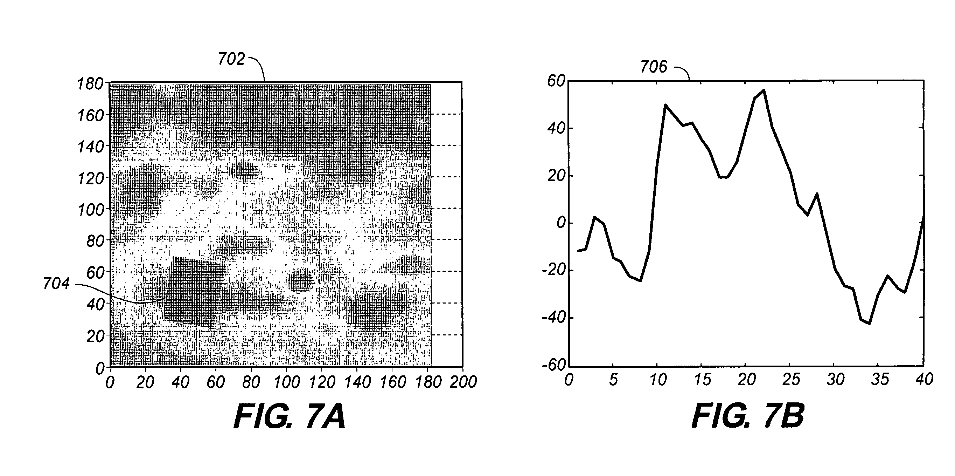

where $\widetilde{I}=\{\lambda_1(\mathbf{p}_{l_k,i})+\lambda_2(\mathbf{p}_{l_k,i})\}$ and W is the number of lines within the band. FIG. 7A shows an actual ROI **702** of a digitized mammogram. A band **704** covers part of an object in ROI **702**. Graph **706** of FIG. 7B displays the actual eigenvalue band integral profile for the pixels within band **704.** The positive curve of the eigenvalue band integral profile indicates that the object covered by band **704** in ROI **702** has concave type surface in terms of its intensity values. Persons skilled in the art will understand that metrics other than eigenvalue band integral profile that is devised in the present invention, such as, intensity profiles, could be employed for the purpose of verifying image object surface convexity and concavity.

The present invention is described as a method. However, in another preferred embodiment, the present invention comprises a computer program product for image linear structure verification in medical applications in accordance with the method described. In describing the present invention, it should be apparent that the computer program of the present invention can be utilized by any well-known computer system, such as the personal computer. However, many other types of computer systems can be used to execute the computer program of the present invention. Consequently, the computer system will not be discussed in further detail herein.

It will be understood that the computer program product of the present invention may make use of image manipulation algorithms and processes that are well known. Accordingly, the present description will be directed in particular to those algorithms and processes forming part of, or cooperating more directly with, the method of the present invention. Thus, it will be understood that the computer program product embodiment of the present invention may embody algorithms and processes not specifically shown or described herein that are useful for implementation. Such algorithms and processes are conventional and within the ordinary skill in such arts.

Additional aspects of such algorithms and systems, and hardware and/or software for producing and otherwise processing the images or cooperating with the computer program product of the present invention, are not specifically shown or described herein and may be selected from such algorithms, systems, hardware, components and elements known in the art.

The computer program for performing the method of the present invention may be stored in a computer readable storage medium. This medium may comprise, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program. The computer program for performing the method of the present invention may also be stored on computer readable storage medium that is connected to the image processor by way of the internet or other communication medium. Those skilled in the art will readily recognize that the equivalent of such a computer program product may also be constructed in hardware.

It will be appreciated that variations and modifications can be effected by a person of ordinary skill in the art without departing from the scope of the invention. The subject matter of the present invention relates to digital image processing and computer vision technologies, which is understood to mean technologies that digitally process a digital image to recognize and thereby assign useful meaning to human understandable objects, attributes or conditions, and then to utilize the results obtained in the further processing of the digital image.

**PARTS LIST**

|     |                                      |
|-----|--------------------------------------|
| 150 | workflow chart                       |
| 152 | controllable parameter generator     |
| 154 | constant parameter generator         |
| 156 | input for mammographic images        |
| 158 | step of parameter selection          |
| 160 | step of linear structure verification |
| 162 | step of human intervention           |
| 164 | feedback path                        |
| 168 | human operator or user               |
| 174 | command path                         |
| 176 | forward path                         |
| 252 | algorithm step for preprocessing images |

256     algorithm step for linear structure verification
258     algorithm step for MCC classification
260     algorithm step for post processing
301     workflow chart
302     algorithm step for locating candidate clusters
304     algorithm step for defining rotatable bands
306     algorithm step for generating and evaluating features
308     algorithm step for tagging candidate MCC clusters
310     algorithm stem for assessing correctness of tags
402     mammogram
404     region of interest (ROI)
502     graph (region of interest)
504     object
506     a band
508     a band line
510     a band pixel
602     graph (surfaces)
604     convex surface
606     concave surface
612     graph (eigenvalues)
614     negative eigenvalues
616     positive eigenvalues
702     graph (region of interest)
704     a band
706     eigenvalue band integral profile
802     algorithm step of locating candidate spots
804     algorithm step of forming MCC candidate clusters
806     algorithm step of ranking candidate clusters
808     algorithm step of verifying linear structures
810     algorithm step of verifying linear structures near candidate clusters
902     region of interest
904     region of interest
1002     a graph of a band and a linear structure
1004     a graph of a band and a linear structure
1102     a region of interest
1104     a graph
1202     a region of interest with a band
1302     a graph
1304     a graph
1402     a graph
1502     a graph
1504     a graph
1506     a graph
1508     a graph
1602     a graph
1702     mammograms
1802     a graph

**SUMMARY OF THE INVENTION.**

1. A method for verification of image linear structure in medical imaging applications, comprising:

providing a configurable linear structure verifier in a medical imaging system;
selecting parameters for the linear structure verifier from a plurality of different parameter generating sources;
configuring the verifier according to selected parameters; and
verifying linear structure using cascade rules.

2. A method as in 1 wherein the verifier uses a microcalcification candidate cluster driven linear structure verification methodology.

3. A method as in 1 wherein at least one of the parameter generating sources is controllable by human input.

4. A method as in 1 wherein the verifier can be used in different positions in a workflow.

5. A method as in 1 wherein the verifier can be configured to have various functional combinations.

6. A method as in 1 wherein the medical imaging system is a mammography computer-aided detection system.

7. A method as in 6, further comprising analyzing mammography images from the detection system to form microcalcification clusters; and classifying the clusters into malignant and benign types, the classifying being accomplished either before or after the verifying.

8. A method as in 1 wherein the verifier can be configured to realize different operational points.

9. A method for verification of microcalcification candidate cluster driven linear structure in mammographic images, comprising:

    locating a plurality of microcalcification candidate clusters in digital mammographic images;
    extracting rotatable bands in the mammographic images;
    processing the rotatable bands to generate identifiable features and evaluating the features;
    attaching a tag to each cluster based on results of the evaluating;
    further analyzing the bands; and
    removing any tag that is attached incorrectly.

10. A method as in 9 further comprising steps of:

    applying a plurality of image processing and computer vision procedures that find connected pixels that present characteristics which are similar to those of microcalcifications in a mammographic image;
    grouping the connected pixels into microcalcification candidate spots;
    grouping a plurality of microcalcification candidate spots that are close to each other within a certain distance into a cluster; and
    attaching relevant parameters to the cluster.

11. A method as in 9 further comprising a step of:

    using positions of the candidate spots of the candidate cluster to define rotatable bands that enclose all or part of the candidate spots in the mammographic image.

12. A method as in 9 further comprising the steps of:

    applying image processing and computer vision algorithms to image pixels within the rotatable bands;
    extracting information related to linear structures from the processed image pixels; and
    applying cascade rules to extracted information to confirm the presence of linear structures.

13. A method as in 9 wherein the attached tag indicates that the cluster is associated with linear structures.

14. A method as in 9 further comprising the steps of:

    applying image analysis algorithms to pixels in the rotatable bands for clusters that are evaluated as being associated with linear structures; and
    removing attached tag if the analysis results are satisfied.

15. A method as in 14 wherein the analysis results satisfy topological requirements.

16. A method as in 9, wherein locating a cluster includes a step of transforming an intensity region of interest into a gradient magnitude region of interest.

17. A method of 16, further comprising a step of transforming the rotatable bands of a gradient magnitude region of interest into a discretized curve in Hough parameter space; and analyzing the gradient magnitude region of interest to detect candidate spots.

18. A method as in 9, wherein the identified features of the rotatable bands include a maximum relative magnitude of ensemble average curves of a set of lines in the rotatable bands; and an ensemble average ratio of maximum to minimum average curves in the bands.

19. A method of 18, wherein analyzing the gradient magnitude region includes a step of detecting ring structure around a spot.

## Claims

1. A method for verification of image linear structure in medical imaging applications, comprising:

   providing a configurable linear structure verifier in a medical imaging system;
   selecting parameters for the linear structure verifier from a plurality of different parameter generating sources;
   configuring the verifier according to selected parameters; and
   verifying linear structure using cascade rules.

2. A method as in claim 1 wherein the verifier uses a microcalcification candidate cluster driven linear structure verification methodology.

3. A method as in claim 1 wherein the verifier can be used in different positions in a workflow.

4. A method as in claim 1 wherein the verifier can be configured to have various functional combinations.

5. A method as in claim 1 wherein the medical imaging system is a mammography computer-aided detection system.

6. A method as in claim 6, further comprising analyzing mammography images from the detection system to form microcalcification clusters; and classifying the clusters into malignant and benign types, the classifying being accomplished either before or after the verifying.

7. A method as in claim 1 wherein the verifier can be configured to realize different operational points.

8. A method for verification of microcalcification candidate cluster driven linear structure in mammographic images, comprising:

   locating a plurality of microcalcification candidate clusters in digital mammographic images;
   extracting rotatable bands in the mammographic images;
   processing the rotatable bands to generate identifiable features and evaluating the features;
   attaching a tag to each cluster based on results of the evaluating;
   further analyzing the bands; and
   removing any tag that is attached incorrectly.

9. A method as in claim 9 further comprising steps of:

   applying a plurality of image processing and computer vision procedures that find connected pixels that present characteristics which are similar to those of microcalcifications in a mammographic image;
   grouping the connected pixels into microcalcification candidate spots;
   grouping a plurality of microcalcification candidate spots that are close to each other within a certain distance into a cluster; and
   attaching relevant parameters to the cluster.

10. A method as in claim 9 further comprising the steps of:

applying image processing and computer vision algorithms to image pixels within the rotatable bands;
extracting information related to linear structures from the processed image pixels; and
applying cascade rules to extracted information to confirm the presence of linear structures.

**FIG. 1**

EP 2 023 271 A2

**FIG. 2A**

**FIG. 2B**

301

302 LOCATING MCC CANDIDATE CLUSTERS

304 DEFINING ROTATABLE BANDS

306 GENERATING IDENTIFIABLE FEATURES AND SUBSEQUENTLY EVALUATING THE FEATURES USING CASCADE RULES

310 ADDING A TAG TO THE CANDIDATE CLUSTER BASED ON EVALUATION RESULTS

312 ANALYZING THE BAND AND REMOVING THE TAG ADDED INCORRECTLY

FIG. 3

404

MCC
CLUSTER
MARK

MCC SPOT

*FIG. 4B*

402

*FIG. 4A*

FIG. 5

**FIG. 6A**

**FIG. 6B**

*FIG. 7B*

*FIG. 7A*

FIG. 8

**FIG. 9A**

**FIG. 9B**

**FIG. 10A**

**FIG. 10B**

**FIG. 11A**

**FIG. 11B**

1202

FIG. 12

**FIG. 13A**

**FIG. 13B**

EP 2 023 271 A2

BAND INTEGRAL PROFILE STATS DISTRIBUTION

1402

Region B

Region A

TP

TP

Region C

Region D

Region E

TP

Linear Structures

MAXIMUM BIP PEAK-PEAK MAGNITUDE

2500
2000
1500
1000
500
0.0

0.1  0.2  0.3  0.4  0.5  0.6  0.7  0.8  0.9  1.0

MAX AND MIN BIP PEAK-PEAK MAGNITUDE RATIO

*FIG. 14*

Band with Linear Structure

FIG. 15A

1502

Hough Accumulator

FIG. 15B

1504

Lesion Band

FIG. 15C

1506

Hough Accumulator

FIG. 15D

1508

FIG. 16

EP 2 023 271 A2

*FIG. 17*

FIG. 18

## REFERENCES CITED IN THE DESCRIPTION

**Patent documents cited in the description**

- US 20020159622 A

- US 83424307 A, Chen

**Non-patent literature cited in the description**

- **R. ZWIGGELAAR ; T. C. PARR ; C. J. TAYLOR.** Finding orientated line patterns in digital mammographic images. *Proc. 7th Br. Machine Vision Conf.,* 1996, 715-724
- **N. CERNEAZ ; M. BRADY.** Finding Curvilinear Structures in Mammograms. *Lecture Notes in Computer Science,* 1995, vol. 905, 372-382
- **WAI et al.** A Multi-resolution CLS Detection Algorithm for Mammographic Image Analysis,'' Medical Imaging Computing and Computer-Assisted Intervention. *MICCAU,* 2004, 865-872

- **ZHANG et al.** A New False Positive Reduction Method for MCCs Detection in Digital Mammography. *Acoustics, Speech and Signal Processing 2001, Proc. IEEE Intl. Conf. on (ICASSP,* 2001, vol. 2 (2001), 1033-1036
- **STELIOS HALKIOTIS et al.** Automatic detection of clustered microcalcifications in digital mammograms using mathematical morphology and neural networks. *Signal Processing,* July 2007, vol. 87 (7